# EUROPEAN PATENT SPECIFICATION

(11) **EP 2 505 844 B1**
(45) Date of publication and mention of the grant of the patent: **18.07.2018**
(21) Application number: 10833523.3
(22) Date of filing: 22.11.2010
(51) Int. Cl.: F04D 13/06, F04D 15/00, H02K 17/06, H02K 17/08

(54) **AUTOMATIC PUMP AND AN OPERATION CONTROL METHOD FOR THE SAME**
AUTOMATISCHE PUMPE UND BETRIEBSSTEUERVERFAHREN DAFÜR
POMPE AUTOMATIQUE ET PROCÉDÉ DE COMMANDE DE FONCTIONNEMENT DE CETTE POMPE

(30) Priority: 25.11.2009 KR 20090114524
(43) Date of publication of application: 03.10.2012
(73) Proprietor: Wilo Pumps Ltd, Gimhae-si, Gyeongsangnam-do 621-807 (KR)
(72) Inventor: KIM, Chul, Gimhae-si Gyeongsangnam-do 621-740 (KR)
(74) Representative: Cohausz Hannig Borkowski Wißgott
(86) International application number: PCT/KR2010/008238
(87) International publication number: WO 2011/065711

(56) References cited:
- EP-A1- 0 939 228
- CN-Y- 2 921 378
- DE-A1- 4 031 708
- JP-A- 2003 120 580
- US-A- 4 436 486
- US-A- 4 737 701
- US-A- 5 281 094
- US-A1- 2005 095 150
- US-A1- 2008 166 246

## Description

### BACKGROUND OF THE INVENTION

### 1. Field of the invention

The present invention relates to an automatic pump and an operation control method of the automatic pump.

### 2. Description of the Prior Art

As generally known in the art, a pump refers to an apparatus for transferring fluid by the action of pressure, and an automatic pump refers to a pump that automatically rotates or stops an impeller for forcedly discharging introduced fluid according to preset conditions.

An automatic pump has a housing which forms a flow path for a fluid. In addition, a motor-driven impeller is installed within the housing, and a pressure sensor for sensing the internal pressure of the housing or a flow switch for sensing the quantity of fluid discharged out of the housing is provided at one side of the housing.

Thus, in the automatic pump, the internal pressure of the housing turns the drive motor to operate or stop, or the fluid discharge out of the housing causes the motor to run or pause, which in turn rotates or suspends the impeller.

Since the conventional automatic pumps have the motor driven in constant speed, the impeller is always rotated constantly. The resultant inability to control the speed of rotation of the impeller depending on the desired fluid discharge rate causes a deterioration of the pump efficiency.

In addition, as for an automatic pump with a pressure switch installed, the frequent changes of the internal pressure in the housing trigger the motor on and off too often, resulting in a problem of wasted energy. Moreover, in the case of the automatic pump with the flow switch installed, a slow reaction rate and insufficient fluid discharge would leave the motor difficult to control.

To solve the above-mentioned problems, there has been an automatic pump developed to have a pressure sensor for sensing an internal pressure of a housing and an inverter for carrying out DC to AC conversion responsive to the pressure sensed by the pressure sensor and changing the frequency and voltage, so as to control the rotation speed of the motor according to the internal pressure of the housing or an internal pressure of a discharge pipe communicating with the housing.

The patent application US 2005/0095150 A1 shows a multistage pump with a longitudinal axis, an inlet for receiving a fluid and an outlet for discharging a pressurized fluid. The pump comprises a motor, a first circuit board inverter with microcontroller, a pressure transducer disposed within the pump body and a control panel that can be used to program operational characteristics of the pump. In addition, the pump includes a software to control features of the pump. In one embodiment, an electric signal of the pressure transducer allows the microcontroller to operate automatic start and stop cycles and to modulate the frequency and amplitude of a frequency converter of a three phase induction motor.

Further pumps with at least one pressure sensor for controlling the motor speed are known from the documents CN 2921378 Y and JP 2003120580 A.

However, the inverter-installed automatic pumps have a drawback in that they require a high priced inverter, which
increases the manufacturing cost of the automatic pumps and also undesirably adds to the bulkiness of the automatic pumps.

### SUMMARY OF THE INVENTION

Accordingly, the present invention has been made to solve the above-mentioned problems occurring in the prior art, and an object of the present invention is to provide an automatic pump and a method for controlling the operation thereof whereby reducing the manufacturing cost thereof as well as the volume of the automatic pump

In order to accomplish this object, there is provided an automatic pump including: a housing having an inlet formed at one side for a fluid to enter and an outlet formed at another side for discharging the fluid; an impeller installed inside of the housing for forcefully drawing the fluid through the inlet into the housing and then forcefully discharging the fluid through the outlet; a motor being capable of shifting the impeller through multi-stage rotational speeds or into a stop; a control unit for controlling the motor; a pressure sensor for sensing an internal pressure of the housing and transmitting the internal pressure to the control unit; and a switching unit responsive to a signal corresponding to the internal pressure of the housing transmitted from the pressure sensor to the control unit for selectively changing winding counts of a stator coil of the motor and thereby running the motor at one of set multi-stage rotational speeds or stopping the motor.

In accordance with another aspect of the present invention, there is provided a method for controlling operation of an automatic pump provided with a housing, an impeller installed inside of the housing for forcefully drawing and discharging a fluid into and out of the housing, a motor being capable of shifting the impeller through multi-stage rotational speeds or into a stop, and a pressure sensor for sensing an internal pressure of the housing, the method including: comparing an internal pressure of the housing after sensing the internal pressure with a set pressure; continuously sensing the internal pressure of the housing if the internal pressure is greater than the set pressure, and driving the motor if the internal pressure is equal to or less than the set pressure; and sensing a change in the internal pressure of the housing while the motor is running, and if the change is sensed, accelerating or decelerating rotational speeds of the motor by selectively switching winding counts of a stator coil of the motor.

The automatic pump and its operation control method according to the present invention are responsive to the internal pressure of the housing which forms a flow path within the automatic pump for making selective switching connections with variable winding counts of a stator coil of a pump motor, and thereby shift the rotational speed of the motor to an appropriate one of multi-stage rotational speeds or stops the same. This eliminates the need for employing the inverters as in the conventional automatic pumps to provide a substantial cost reduction as well as enabling compactness of the pump.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view of an automatic pump according to an embodiment of the present invention;
FIG. 2 is a cross-sectional view taken along line A-A of FIG. 1;
FIG. 3 is a wiring diagram of a stator coil functioning as a switching unit for shifting the motor speed of an automatic pump according to an embodiment of the present invention;
FIG. 4 is a cross-sectional view of a pressure sensor of an automatic pump according to an embodiment of the present invention;
FIG. 5 is a flowchart for illustrating a drive control method of an automatic pump according to an embodiment of the present invention; and
FIG. 6 is a flowchart, connected to the flow chart of FIG. 5, for further illustrating a stop control method of an automatic pump according to an embodiment of the present invention.

### DETAILED DESCRIPTION OF THE PREFERRED EMBODIMENTS

Hereinafter, a preferred embodiment of an automatic pump and its operation control method according to the present invention will be described with reference to the accompanying drawings.

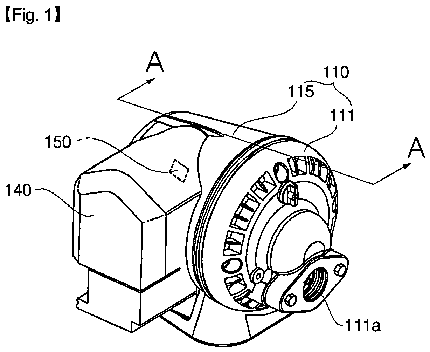

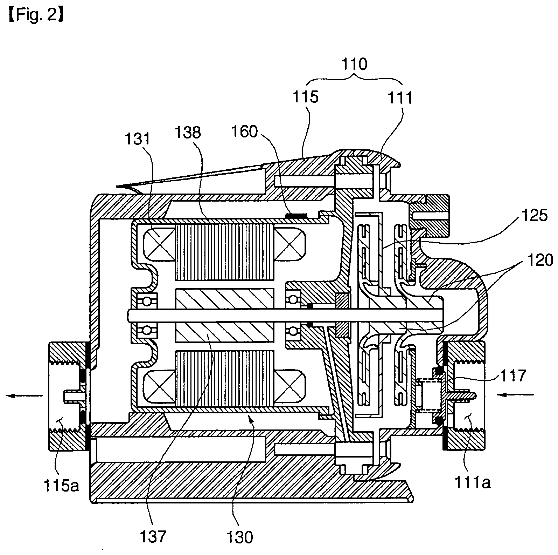

FIG. 1 is a perspective view of an automatic pump according to an embodiment of the present invention, and FIG. 2 is a cross-sectional view taken along line A-A of FIG. 1.

As shown, in accordance with the present embodiment, the automatic pump includes a housing 110 having a first housing part 111 and a second housing part 115 which are interconnected.

Formed respectively at opposite sides of the housing 110 are an inlet 111a for communicating with a fluid source of, for example, water and an outlet 115a communicating with an application site such as a faucet. More specifically, the inlet 111a is formed on the first housing part 111, and the outlet 115a is formed on the second housing part 115.

Within the housing 110, impellers 120 are installed near the inlet 111a and a motor 130 is mounted near the outlet 115a. Rotated by the motor 130, the impellers 120 forcedly introduce a fluid through the inlet 111a into the housing 110 and forcedly discharge the same through the outlet 115a out of the housing 110.

According to the present embodiment, the automatic pump has two impellers 120 installed with a diffuser 125 interposed between the impellers 120. The diffuser 125 guides the fluid discharged from one the impeller 120 located closer to the inlet 111a to the other the impeller 120 farther from the inlet 111a without loss of energy.

The impeller 120 may be installed either singularly or plurally. In the latter case, a diffuser 125 is interposed between the impellers 120. In addition, a check valve 117 for preventing the fluid within housing 110 from flowing back toward the fluid source when the impeller 120 is stopped is installed at the side of the inlet 111a.

In addition, the motor 130 according to the present embodiment can shift through multiple stages of the rotational speed, such as a low-speed, medium-speed, high-speed. Accordingly, the speed of the impeller 120 also changes through the multiple stages, such as the low-speed, medium-speed, high-speed.

Motor 130 may be installed on the outside of the housing 110.

At one side, the housing 110 has a control unit 140 mounted for controlling the motor 130 and other components, and a pressure sensor 150 installed at a portion of the housing 110 near the control unit 140.

The pressure sensor 150 is installed at a portion of the housing 110 between the outlet 115a and the impeller 120 and detects the internal pressure of the housing 110 and transmits the detected pressure to the control unit 140. Then, the control unit 140 compares a signal corresponding to the internal pressure of the housing 110 transmitted from the pressure sensor 150, with a preset pressure. As a result of the comparison, when there is a pressure change, the control unit 140 stops or drives motor 130 to one of the set multi-stage rotational speeds under a set condition.

At this time, the control unit 140 may compare a predetermined value ± the value of the signal corresponding to the internal pressure of the housing 110 transmitted from the pressure sensor 150, with the preset pressure. As a result of the comparison, when there is a pressure change, the control unit 140 may suspend or drive the motor 130 at one of the set multi-stage rotational speeds.

A switching unit for shifting the rotational speed of motor 130 varies the electric forces of a stator coil 131 by varying the winding counts of the stator coil 131 of the motor 130. Changes of the electric forces of the stator coil 131 vary the electromagnetic force established between the stator coil 131 and the rotor 137 of the motor 130 to cause the rotational speed of the motor 130 to change.

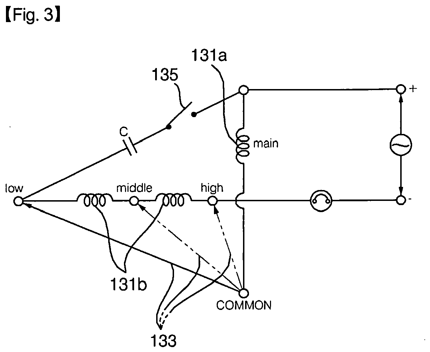

The switching unit will be described with reference to FIGs. 2 and 3. FIG. 3 is a wiring diagram of a stator coil functioning as a switching unit for shifting the motor speed of an automatic pump according to an embodiment of the present invention.

As shown, the switching unit has a main coil 131a constituting the stator coil 131, multiple sub-coils 131b which constitutes the stator coil 131 and are interconnected in series, and a selector switch 133.

One end of the main coil 131a is connected with one end of the serially connected sub-coils 131b, and the other end of the main coil 131a is connected to a portion of the serially connected sub-coils 131b opposite to said one end of the serially connected sub-coils 131b. Said portion of the serially connected sub-coils 131b connected with the other end of main coil 131a is selectively controlled. In other words, one portion is selected from a plurality of portions of the serially connected sub-coils 131b opposite to said one end thereof and is connected via the selector switch 133 to the other end of the main coil 131a.

Depending on the portion of the sub-coils 131b into which the selector switch 133 comes into contact, the stator coil 131 provides variable winding counts so as to shift the rotational speed of the motor 130.

In addition, the main coil 131a is provided with a shut-off switch 135 for interrupting the power supply when the motor 130 is stopped. The selector switch 133 and the shut-off switch 135 are controlled by the control unit 140.

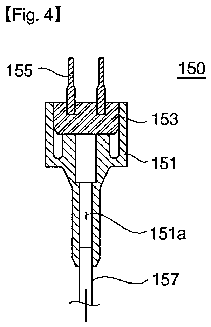

The pressure sensor 150 will be described with reference to FIGs. 1, 2 and 4. FIG. 4 is a cross-sectional view of a pressure sensor of an automatic pump according to an embodiment of the present invention.

As shown, the pressure sensor 150 has a body 151, a deformable plate 153, and connecting terminals 155.

The body 151 is installed on the housing 110. The body 151 is formed with a fluid path 151a having one end which communicates with the interior of the housing 110 where the fluid is introduced and flows. Thus, the fluid is introduced from the housing 110 into the fluid path 151a. At this time, the fluid path 151a and the housing 110 may internally communicate with each other through a connecting pipe 157.

The deformable plate 153 is installed on the body 151 in the fluid path 151a to close the opposite end of the fluid path 151a and comes into contact with the fluid introduced in the fluid path 151a. Fluctuations in the internal pressure of the housing 110 causes the fluid path 151a to correspondingly change its internal pressure, which deforms the deformable plate 153 in varying degrees.

More specifically, the deformable plate 153 is formed of a ceramic material. Thus, when deformation occurs in the deformable plate 153, the resistance value of the deformable plate 153 changes in proportion with the degree of deformation.

The connecting terminals 155 have first ends connected to the deformable plate 153 and second ends connected to the control unit 140 to deliver the resistance value corresponding to the degree of deformation of the deformable plate 153 to the control unit 140.

With the impeller 120 discharging the fluid toward the outlet 115a, if the internal pressure of the fluid path 151a ascends over a set pressure, which implies that the amount of the fluid discharged toward the outlet 115a is exceeded by the amount of the fluid supplied by the impeller 120, the motor 130 is shifted down to a lower rotational speed.

In addition, if the internal pressure of the fluid path 151a descends under the set pressure, which implies that the amount of the fluid discharged toward the outlet 115a is larger than the amount of the fluid supplied by the impeller 120, the motor 130 is shifted up to a higher rotational speed.

The pressure sensor 150 may be mounted on the housing 110 through one-touch fitting (not shown). The one-touch tube fittings are usual connectors for connecting tubes with each other or connecting a tube and a filter with each other.

As shown in FIG. 2, the motor 130 has a frame 138 which is in contact with the fluid flowing into the interior of the housing 110 and has a temperature sensor 160 installed to detect the temperature of the motor 130 and sends the detected temperature to the control unit 140. The control unit 140 may stop or drive the motor 130 in response to the signals received from the temperature sensor 160.

To be more specific, there may be abnormal conditions where the motor 130 in normal operation finds no fluid being discharged to the outlet 115a or no fluid entering the inlet 111a. Then, the motor 130 may be overheated and damaged. To prevent this failure, when the temperature detected by the temperature sensor 160 is greater than the set temperature while the motor 130 is driven, the control unit 140 stops the motor 130.

Cold weather may also damage the pump by freezing the fluid within the housing 110.

As a preventive measure, when the temperature detected by the temperature sensor 160 is lower than a first set temperature in a state in which the motor 130 is in a stationary state, the motor 130 is driven. In addition, after the motor 130 is driven, when the temperature detected by the temperature sensor 160 becomes higher than a second set temperature, which is higher than the first set temperature, the motor 130 is stopped again.

A driving control method for such a construction of the automatic pump of the present embodiment will be described.

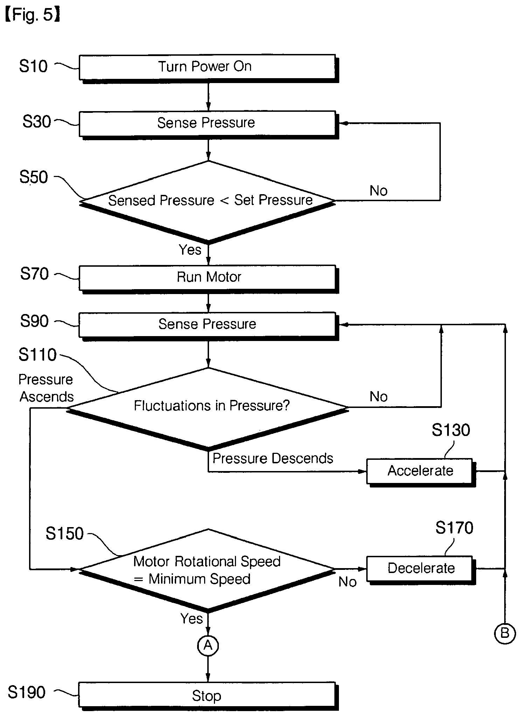

First, the automatic pump driving control method according to the present embodiment will be described with reference to FIGs. 1, 2, and 5. FIG. 5 is a flow chart for illustrating a drive control method of an automatic pump according to an embodiment of the present invention.

It is assumed that the motor 130 is stationary in the initial state.

As shown, in the initial state, the power is turned on at step S10. With the power turned on, a standby state is established to allow driving of the motor 130, and the pressure sensor 150 senses the internal pressure of the housing 110 at step S30.

In addition, at step S50 where the motor 130 is in the standby state, the internal pressure of the housing 110 is compared with the set pressure for driving the motor 130.

In such an event where no fluid is present in the housing 110 as the automatic pump is installed for the first time, there will be no changes in the internal pressure of the housing 110 even with the faucet connected and opened. Additionally, in such a case where the housing 110 has a fluid already introduced but the faucet is at a higher level than the housing 110, opening of the faucet makes no change in the internal pressure of the housing 110.

Thus, at step S50, for driving the motor 130, the internal pressure of the housing 110 is compared with the set pressure. In this case, the set pressure is appropriately provided depending on the characteristics of the automatic pump.

Therefore, if the sensed internal pressure of the housing 110 is higher than the set pressure, the pressure sensing at step S30 is continued, and if the internal pressure of the housing 110 becomes equal to or lower than the set pressure, the motor 130 is driven at step S70.

Assuming the rotational speed of the motor 130 consists of, for example, three optional stepped rotations of slow, medium and high-speeds, the motor 130 may be driven at a proper rotational speed according to the conditions applied.

Driving the motor 130 is performed by turning on the cut-off switch 135 for shutting off standby electric power. Then, the stator coil 131 of the motor 130 is powered to drive the motor 130. Once the motor 130 is driven, the impeller 120 is rotated, which forcedly draws and discharges the fluid into and then out of the interior of the housing 110.

Next, while the motor 130 is in a driving condition, the internal pressure of the housing 110 is sensed at step S90, and then it is determined whether the housing 110 has fluctuations or not in the internal pressure (step S110).

The changes of the internal pressure of the housing 110 occur due to the differences between the amount of fluid discharged through the outlet 115a and the amount of fluid introduced into the housing 110 by the impeller 120.

In other words, the internal pressure of the housing 110 drops if the amount of fluid discharged through the outlet 115a exceeds the amount of fluid drawn into the housing 110, and the internal pressure of the housing 110 rises if the amount of fluid discharged through the outlet 115a falls under the amount of fluid drawn into the housing 110.

In addition, the amount of fluid discharged through the outlet 115a changes by the degree of opening and closing the faucet, and the amount of fluid drawn into the housing 110 changes depending on the rotational speed of the impeller 120. It is natural that the rotational speed of the impeller 120 corresponds to the rotational speed of the motor 130.

The degree of opening and closing the faucet may represent how much a faucet opens if the outlet 115a has a single faucet in communication, and may represent the number of opened faucets if the outlet 115a has a plurality of faucets communicating therewith.

Pressure fluctuation at step S110 implies that the amount of fluid discharged through the outlet 115a and the amount of fluid drawn into the housing 110 are not in balance.

For example, with the motor 130 running at a low, medium and high-speed rotations respectively, repeated experiments are performed to find such an internal pressure of the housing 110 that establishes an equilibrium between the amount of fluid discharged through the outlet 115a and the amount of fluid drawn into the housing 110 to set the internal pressure respectively as a±α (kg_{f}/cm²) for the low speed, a±β (kg_{f}/cm²) for the medium speed, and a±γ (kg_{f}/cm²) for the high speed. In addition, at the low running speed of the motor 130, it is determined that there is no pressure fluctuation if the internal pressure of the housing 110 sensed at step S90 is within the range of a±α (kg_{f}/cm²), and if it is out of the range, it is determined that a pressure fluctuation is present. In addition, at the medium running speed of the motor 130, it is determined that there is no pressure fluctuation if the internal pressure of the housing 110 sensed at step S90 is within the range of a±β (kg_{f}/cm²), and if it is out of the range, it is determined that a pressure fluctuation is present. In addition, at the high running speed of the motor 130, it is determined that there is no pressure fluctuation if the internal pressure of the housing 110 sensed at step S90 is within the range of a±γ (kg_{f}/cm²), and if it is out of the range, it is determined that a pressure fluctuation is present. In this way, the fluctuations in pressure are determined.

Conversely, with the motor 130 running at a low, medium and high-speed rotations respectively, repeated experiments are performed to find such a reference pressure of the housing 110 that establishes an equilibrium between the amount of fluid discharged through the outlet 115a and the amount of fluid drawn into the housing 110 to set the reference pressure respectively as a kg_{f}/cm², b kg_{f}/cm² and c kg_{f}/cm². In addition, at the low running speed of the motor 130, it is determined that there is no pressure fluctuation if the internal pressure of the housing 110 sensed at step S90 is a±α (kg_{f}/cm²), and if not, it is determined that a pressure fluctuation is present. In addition, at the medium running speed of the motor 130, it is determined that there is no pressure fluctuation if the internal pressure of the housing 110 sensed at step S90 is b±α (kg_{f}/cm²), and if not, it is determined that a pressure fluctuation is present. In addition, at the high running speed of the motor 130, it is determined that there is no pressure fluctuation if the internal pressure of the housing 110 sensed at step S90 is c±α (kg_{f}/cm²), and if not, it is determined that a pressure fluctuation is present. In this way, the fluctuations in pressure are determined.

In the present embodiment, the rotational speed of the motor 130 is shifted appropriately depending on changes in internal pressure of the housing 110.

According to the determination on the pressure fluctuations at S110, there are three possible events with the internal pressure of the housing 110 including no fluctuations, pressure descending, and pressure ascending.

No changes in the internal pressure of the housing 110 means an approximate equilibrium maintained between the amount of fluid drawn into the housing 110 and the amount of fluid discharged through the outlet 115a, so the motor 130 is kept driven at the current speed and a continued pressure sensing at step S90 is performed.

In addition, if the internal pressure of the housing 110 shows a descending change, which implies the amount of fluid discharged through the outlet 115a exceeding the amount of fluid drawn into the housing 110, then the rotational speed of the motor 130 is increased at step S130 followed by the pressure sensing at step S90 again.

In addition, an ascending change of the internal pressure of the housing 110 represents that the fluid discharged through the outlet 115a is not present at all or decreased. Therefore, if the internal pressure of the housing 110 shows an ascending change, it is determined whether the internal pressure of the housing 110 is a minimum set speed (step S150).

If internal pressure of the housing 110 is not the minimum set speed, which represents that the fluid discharged through the outlet 115a is decreased, the motor 130 is decelerated (step S170) and the pressure is then sensed (step S90).

The driving control method of the automatic pump of the present embodiment constantly carries out the above process to appropriately control the rotational speed of the motor 130 depending on the amount of fluid discharged to the application site. The rotational speed of the motor 130 is controlled by selectively switching the winding counts of the stator coil 131 of the motor 130.

It is preferable that shifting the speed of the motor 130 in the driving state is done in step-by-step acceleration or deceleration. This is to save the motor 130 from being damaged by preventing an abrupt change in the rotational speed and reduce energy consumption.

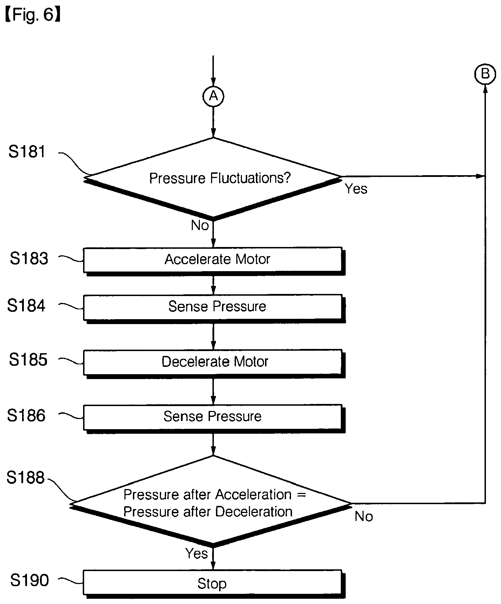

If it is determined at step S150 that the rotational speed of the motor 130 is the lowest speed, which represents that no fluid is discharged out through the outlet 115a, the motor 130 is stopped at step S190. A method of stopping control of the motor 130 will be described with reference to FIGs. 1, 2 and 6.

As shown, if the rotational speed of the motor 130 is the lowest speed, changes in internal pressure of the housing 110 is determined again (step S181). Step S181 is to more accurately determine the condition to stop the motor 130.

While the motor 130 is at the minimum rotational speed, if there is a change in the internal pressure of the housing 110, which represents a change occurring in the amount of fluid discharged through the outlet 115a, then the pressure sensing at step S90 is performed. The reference value of changes in internal pressure at step S181 at the minimum rotational speed of the motor 130 can be appropriately set to a range over a proper pressure considering the characteristics of the automatic pump.

Automatic pumps often encounter performance degradation due to aging or inappropriately low voltage supplies to show underperformance as compared to their designed specifications.

For example, when the motor is driven at a minimum speed with the faucet completely closed, it is assumed that the internal pressure of the housing ascends to 1 kg_{f}/cm² normally. However, with the performance degradation of the automatic pump considered due to aging or low voltage supplies, the stopping control is carried out by setting that the motor running at the minimum speed and accompanied with the internal housing pressure of 0.8 kg_{f}/cm² represents a case of no pressure fluctuation. Therefore, in the actual operation of the automatic pump, there exist such cases where the internal pressure of the housing is 0.8∼ 1 (kg_{f}/cm²) despite the fact that the faucet has not been closed.

According to the present embodiment of driving control method of the automatic pump, when the motor 130 is running at the minimum speed and it is determined that no fluctuations are present in the internal pressure of the housing 110, it is checked whether a complete closure of the faucet causes the no fluctuation or whether this occurs despite the fact that the faucet is not completely closed, and then the motor 130 is stopped (step S190).

No fluctuations in the internal pressure of the housing 110 while the motor 130 is at the minimum rotational speed imply no fluid discharged through the outlet 115a. However, in the present embodiment of driving control method of the automatic pump, in accordance with a safe performance criterion set lower than the maximum performance specification in consideration of factors including the performance degradation of the automatic pump considered, it is determined if there is no fluid discharged through the outlet 115a. To this end, if there is no fluctuations in the internal pressure (step S181), the motor 130 is accelerated from the low speed to the medium speed (step S183), the internal pressure of the housing 110 is detected at the accelerated speed (step S184), and the detected pressure is saved. Further, the motor 130 accelerated to the medium speed is decelerated to the low speed (step S185), the internal pressure of the housing 110 is then detected at the decelerated speed (step S186), and the detected pressure is then saved.

Then, at step S188, the internal pressure of the housing 110 after the accelerating of the motor 130 at step S183 is compared with the internal pressure of the housing 110 after the decelerating of the motor 130 at step S185 to make the comparative determination.

At this time, if the pressure after the acceleration and the pressure after the deceleration are not different within a certain range, which represents no fluid discharged through the outlet 115a, then the motor 130 is stopped at step S190. After the motor 130 is stopped, the standby power supply to the motor 130 is cut off by control unit 140.

In addition, if the difference between the pressure after the acceleration and the pressure after the deceleration is beyond the certain range, which implies that it has been determined that there is no fluctuations in the internal pressure of the housing 110 based on the aforementioned performance criterion set lower than the peak performance specification in consideration of the factors including the performance degradation of the automatic pump, then the fluid is discharged toward the outlet 115a. Thus, the pressure sensing at step S90 is performed.

Since the internal pressure after accelerating the motor 130 is higher than the internal pressure after decelerating the motor 130, a certain level or more of the pressure after the deceleration as compared to the pressure after the acceleration is determined as equality of the two pressures, and the pressure after the deceleration under the certain level is determined as inequality of the two pressures.

The driving control method of the automatic pump of the present embodiment may include stopping the motor 130 by sensing the temperature of the motor 130.

Specifically, with the motor 130 in the driving condition, if a sensed temperature of the motor 130 is greater than a set temperature, the motor 130 is stopped. This is to safeguard the motor 130 from running in an abnormal condition despite no fluid being discharged or no fluid being introduced and thereby prevent the motor 130 from being damaged.

In addition, when the motor 130 is in the quiescent state, if the sensed temperature of the motor 130 is equal to or lower than a first set temperature, the motor 130 is driven, and if the motor 130 after driving reaches a second set temperature or above, the motor 130 is stopped. This is to prevent cold weather from breaking the pump with frozen fluid.

The driving control method of the automatic pump of the present embodiment is responsive to the internal pressure of the housing 110 for making selective switching connections with variable winding counts of the stator coil 131 of the motor 130, and thereby shifting the rotational speed of the motor 130 to one of the multi-step rotational speeds which have been set. Thus, this obviates the inverters used in the conventional automatic pumps towards a cost reduction and pump compactness.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. An automatic pump comprising:
a housing (110) having an inlet (111a) formed at one side for a fluid to enter and an outlet (115a) formed at another side for discharging the fluid;
an impeller (120) installed inside of the housing (110) for forcefully drawing the fluid through the inlet (111a) into the housing (110) and then forcefully discharging the fluid through the outlet (115a);
a motor (130);
a control unit (140) for controlling the motor (130); and
a pressure sensor (150) for sensing an internal pressure of the housing (110) and transmitting the internal pressure to the control unit (140);
**characterized in that** the motor (130) is capable of shifting the impeller (120) through multi-stage rotational speeds or into a stop, and that the automatic pump comprising
a switching unit responsive to a signal corresponding to the internal pressure of the housing (110) transmitted from the pressure sensor (150) to the control unit (140) for selectively changing winding counts of a stator coil (131) of the motor (130) and thereby running the motor (130) at one of set multi-stage rotational speeds or stopping the motor (130).

2. The automatic pump as claimed in claim 1, wherein the switching unit includes a main coil (131a) for forming the stator coil (131) of the motor (130), a plurality of sub-coils (131b) interconnected in series for forming the stator coil (131) of the motor (130), and a selector switch,
wherein the main coil (131a) has one end connected to one end of the sub-coils (131b) interconnected in series and another end connected to a portion of the sub-coils (131b), said portion of the sub-coils (131b) being selected from a plurality of portions of the sub-coils (131b) interconnected in series by the selector switch (133), said portions of the sub-coils (131b) being opposite to said one end of the sub-coils (131b).

3. The automatic pump as claimed in claim 2, wherein the main coil (131a) is provided with a shut-off switch (135) for blocking a standby electric power.

4. The automatic pump as claimed in claim 3, wherein the pressure sensor (150) comprises:
a body (151) installed in the housing (110) and formed with a fluid path (151a) having one end communicating with the interior of the housing (110);
a deformable plate (153) installed on the body (151) in the fluid path (151a) for closing the other end of the fluid path (151a) and deforming in response to a change in the internal pressure of the housing (110); and
a connecting terminal (155) installed on the body (151) for delivering the degree of deformation of the deformable plate (153) to the control unit (140).

5. The automatic pump as claimed in claim 4, wherein the motor (130) has a temperature sensor (160) installed for sensing a temperature of the motor (130)and transmitting the temperature to the control unit (140), and
the control unit (140) is responsive to a signal received from the temperature sensor (140) for stopping or driving the motor (130).

6. A method for controlling operation of an automatic pump provided with a housing (110), an impeller (120) installed inside of the housing (110) for forcefully drawing and discharging a fluid into and out of the housing (110), a motor (130) being capable of shifting the impeller (120) through multi-stage rotational speeds or into a stop, and a pressure sensor (150) for sensing an internal pressure of the housing (110), the method comprising the steps of:
comparing an internal pressure of the housing (110) after sensing the internal pressure with a set pressure;
continuously sensing the internal pressure of the housing (110) if the internal pressure is greater than the set pressure, and driving the motor (130) if the internal pressure is equal to or less than the set pressure; and
sensing a change in the internal pressure of the housing (110) while the motor (130) is running, and if the change is sensed, accelerating or decelerating rotational speeds of the motor (130) by selectively switching winding counts of a stator coil (131) of the motor (130).

7. The method as claimed in claim 6, further comprising:
accelerating the rotational speed of the motor (130) if the internal pressure of the housing (110) is determined to be descending while the motor (130) is running;
determining whether the rotational speed of the motor (130) is a minimum speed or not if the internal pressure of the housing (110) is determined to be ascending while the motor (130) is running; and
decelerating the rotational speed of the motor (130) when the rotational speed is not the minimum speed and stopping the motor (130) when the rotational speed is the minimum speed.

8. The method as claimed in claim 7, further comprising:
accelerating the rotational speed of the motor (130) running at the minimum speed and then sensing the internal pressure of the housing (110);
decelerating an accelerated rotational speed of the motor (130) followed by sensing the internal pressure of the housing (110); and
when internal pressures of the housing (110) sensed after the accelerating and the decelerating are equal to each other, stopping the motor (130).

9. The method as claimed in claim 8, wherein the stator coil (131) is provided by a main coil (131a) and a plurality of sub-coils (131b) interconnected in series,
the sub-coils (131b) interconnected in series has one end connected to one end of the main coil (131a) and a portion selectively connected to another end of the main coil (131a), said portion of the sub-coils (131b) being selected from a plurality of portions of the sub-coils (131b) opposite to said one end of the sub-coils (131b), and
the rotational speed of the motor (130) is shifted through a selective switching connection between said another end of the main coil (131a) and one portion among said portions of the sub-coils (131b).

10. The method as claimed in claim 9, wherein a standby electric power supplied to the motor (130) is blocked when the motor (130) is at rest.

11. The method as claimed in claim 9, further
comprising:
providing a temperature sensor (160) for sensing a temperature of the motor (130);
stopping the motor (130) in running condition if the temperature of the motor (130) is sensed to be greater than a set temperature;
driving the motor (130) at rest if the temperature of the motor (130) is sensed to be equal to or less than a first set temperature; and
stopping the motor (130) after the driving if the temperature of the motor (130) is sensed to be ascending from the first set temperature to a second set temperature.

## Patentansprüche

1. Automatische Pumpe, aufweisend:
ein Gehäuse (110) mit einem Einlass (111a), der auf einer Seite für das Eintreten eines Fluids ausgebildet ist, und einem Auslass (115a), der auf einer anderen Seite zum Abgeben des Fluids ausgebildet ist;
ein Laufrad (120), das zum zwingenden Einziehen des Fluids durch den Einlass (111a) in das Gehäuse (110) und dann zwingenden Abgeben des Fluids durch den Auslass (115a) innerhalb des Gehäuses (110) eingerichtet ist;
einen Motor (130);
eine Steuereinheit (140) zum Steuern des Motors (130); und
einen Drucksensor (150) zum Abfühlen eines Innendrucks des Gehäuses (110) und Übertragen des Innendrucks zur Steuereinheit (140);
**dadurch gekennzeichnet, dass** der Motor (130) dazu imstande ist, das Laufrad (120) durch mehrstufige Drehzahlen oder zu einem Anhalten zu verstellen, und dass die automatische Pumpe
eine Schalteinheit aufweist, die auf ein Signal, das dem Innendruck des Gehäuses (110) entspricht, welcher vom Drucksensor (150) zur Steuereinheit (140) übertragen wird, zum selektiven Ändern von Wicklungszählungen einer Statorspule (131) des Motors (130) und dadurch zum Betreiben des Motors (130) auf einer von eingestellten mehrstufigen Drehzahlen oder Anhalten des Motors (130) anspricht.

2. Automatische Pumpe nach Anspruch 1, wobei die Schalteinheit eine Hauptspule (131a) zum Ausbilden der Statorspule (131) des Motors (130), mehrere Nebenspulen (131b), die zum Ausbilden der Statorspule (131) des Motors (130) in Reihe miteinander verbunden sind, und einen Wahlschalter aufweist,
wobei die Hauptspule (131a) ein Ende mit einem Ende der Nebenspulen (131b), die in Reihe miteinander verbunden sind, verbunden aufweist und ein anderes Ende mit einem Abschnitt der Nebenspulen (131b) verbunden aufweist, wobei der Abschnitt der Nebenspulen (131b) aus mehreren Abschnitten der Nebenspulen (131b), die in Reihe miteinander verbunden sind, durch den Wahlschalter (133) ausgewählt wird, wobei die Abschnitte der Nebenspulen (131b) dem einen Ende der Nebenspulen (131b) gegenüberliegen.

3. Automatische Pumpe nach Anspruch 2, wobei die Hauptspule (131a) mit einem Abstellschalter (135) zum Blockieren eines elektrischen Bereitschaftsstroms versehen ist.

4. Automatische Pumpe nach Anspruch 3, wobei der Drucksensor (150) Folgendes aufweist:
einen Körper (151), der im Gehäuse (110) eingerichtet ist und mit einem Fluidweg (151a) ausgebildet ist, der ein Ende aufweist, welches mit dem Inneren des Gehäuses (110) in Verbindung steht;
eine verformbare Platte (153), die am Körper (151) im Fluidweg (151a) zum Verschließen des anderen Endes des Fluidwegs (151a) und zum Verformen in Reaktion auf eine Änderung des Innendrucks des Gehäuses (110) eingerichtet ist; und
einen Verbindungsanschluss (155), der am Körper (151) zum Zuführen des Verformungsgrads der verformbaren Platte (153) zur Steuereinheit (140) eingerichtet ist.

5. Automatische Pumpe nach Anspruch 4, wobei der Motor (130) einen Temperatursensor (160) aufweist, der zum Abfühlen einer Temperatur des Motors (130) und Übertragen der Temperatur zur Steuereinheit (140) eingerichtet ist, und
wobei die Steuereinheit (140) auf ein Signal, das vom Temperatursensor (140) zum Anhalten oder Betreiben des Motors (130) empfangen wird, anspricht.

6. Verfahren zum Steuern des Betriebs einer automatischen Pumpe, die mit einem Gehäuse (110), einem Laufrad (120), das zum zwingenden Einziehen und Abgeben eines Fluids in das und aus dem Gehäuse (110) innerhalb des Gehäuses (110) eingerichtet ist, einem Motor (130), der dazu imstande ist, das Laufrad (120) durch mehrstufige Drehzahlen oder zu einem Anhalten zu verstellen, und einem Drucksensor (150) zum Abfühlen eines Innendrucks des Gehäuses (110) versehen ist, wobei das Verfahren die folgenden Schritte aufweist:
Vergleichen eines Innendrucks des Gehäuses (110) nach dem Abfühlen des Innendrucks mit einem Einstelldruck;
fortlaufendes Abfühlen des Innendrucks des Gehäuses (110), wenn der Innendruck größer als der Einstelldruck ist, und Antreiben des Motors (130), wenn der Innendruck gleich dem oder geringer als der Einstelldruck ist; und
Abfühlen einer Änderung des Innendrucks des Gehäuses (110), während der Motor (130) läuft, und, wenn die Änderung abgefühlt wird, Beschleunigen oder Verlangsamen von Drehzahlen des Motors (130) durch selektives Schalten von Wicklungszählungen einer Statorspule (131) des Motors (130).

7. Verfahren nach Anspruch 6, ferner aufweisend:
Beschleunigen der Drehzahl des Motors (130), wenn bestimmt wird, dass der Innendruck des Gehäuses (110) abnimmt, während der Motor (130) läuft;
Bestimmen, ob die Drehzahl des Motors (130) auf einer Minimaldrehzahl liegt oder nicht, wenn bestimmt wird, dass der Innendruck des Gehäuses (110) abnimmt, während der Motor (130) läuft; und
Verlangsamen der Drehzahl des Motors (130), wenn die Drehzahl nicht auf der Minimaldrehzahl liegt, und Anhalten des Motors (130), wenn die Drehzahl die Minimaldrehzahl ist.

8. Verfahren nach Anspruch 7, ferner aufweisend:
Beschleunigen der Drehzahl des Motors (130), der auf der Minimaldrehzahl läuft, und anschließendes Abfühlen des Innendrucks des Gehäuses (110);
Verlangsamen einer beschleunigten Drehzahl des Motors (130), gefolgt vom Abfühlen des Innendrucks des Gehäuses (110); und,
wenn Innendrücke des Gehäuses (110), die nach dem Beschleunigen und dem Verlangsamen abgefühlt werden, gleich sind, Anhalten des Motors (130).

9. Verfahren nach Anspruch 8, wobei die Statorspule (131) durch eine Hauptspule (131a) und mehrere Nebenspulen (131b), die in Reihe miteinander verbunden sind, vorgesehen wird,
wobei die Nebenspulen (131b), die in Reihe miteinander verbunden sind, ein Ende mit einem Ende der Hauptspule (131a) verbunden und einen Abschnitt mit einem anderen Ende der Hauptspule (131a) selektiv verbunden aufweisen, wobei der Abschnitt der Nebenspulen (131b) aus mehreren Abschnitten der Nebenspulen (131b) gegenüber dem einen Ende der Nebenspulen (131b) ausgewählt wird, und
wobei die Drehzahl des Motors (130) durch eine selektive Schaltverbindung zwischen dem anderen Ende der Hauptspule (131a) und einem Abschnitt unter den Abschnitten der Nebenspulen (131b) verstellt wird.

10. Verfahren nach Anspruch 9, wobei ein elektrischer Bereitschaftsstrom, der dem Motor (130) zugeführt wird, blockiert wird, wenn der Motor (130) ruht.

11. Verfahren nach Anspruch 9, ferner aufweisend:
Vorsehen eines Temperatursensors (160) zum Abfühlen einer Temperatur des Motors (130);
Anhalten des Motors (130) im laufenden Zustand, wenn abgefühlt wird, dass die Temperatur des Motors (130) über einer Einstelltemperatur liegt;
Antreiben des Motors (130) im Ruhezustand, wenn abgefühlt wird, dass die Temperatur des Motors (130) gleich eines oder geringer als eine erste Einstelltemperatur ist; und
Anhalten des Motors (130) nach dem Antreiben, wenn abgefühlt wird, dass die Temperatur des Motors (130) von der ersten Einstelltemperatur auf eine zweite Einstelltemperatur ansteigt.

## Revendications

1. Pompe automatique comprenant :
un carter (110) comportant une entrée (111a) formée au niveau d'un côté pour l'entrée d'un fluide et une sortie (115a) formée au niveau d'un autre côté pour l'évacuation du fluide ;
une roue à aubes (120) installée à l'intérieur du carter (110), servant à attirer de manière forcée le fluide à travers l'entrée (111a) dans le carter (110) puis à évacuer de manière forcée le fluide à travers la sortie (115a) ;
un moteur (130) ;
une unité de commande (140) servant à commander le moteur (130) ; et
un capteur de pression (150) servant à détecter une pression intérieure du carter (110) et à transmettre la pression intérieure à l'unité de commande (140) ;
**caractérisée en ce que** le moteur (130) est apte à faire passer la roue à aubes (120) entre des vitesses de rotation échelonnées ou à la mettre à l'arrêt, et **en ce que** la pompe automatique comprend
une unité de commutation réagissant à un signal correspondant à la pression intérieure du carter (110) transmis du capteur de pression (150) à l'unité de commande (140) afin de changer de manière sélective un nombre d'enroulements d'une bobine de stator (131) du moteur (130) et ainsi faire tourner le moteur (130) à l'une d'un ensemble de vitesses de rotation échelonnées ou mettre le moteur (130) à l'arrêt.

2. Pompe automatique selon la revendication 1, dans laquelle l'unité de commutation comprend une bobine principale (131a) servant à former la bobine de stator (131) du moteur (130), une pluralité de bobines secondaires (131b) mutuellement reliées en série, servant à former la bobine de stator (131) du moteur (130), et un sélecteur,
dans laquelle la bobine principale (131a) a une extrémité reliée à une extrémité des bobines secondaires (131b) mutuellement reliées en série et une autre extrémité reliée à une partie des bobines secondaires (131b), ladite partie des bobines secondaires (131b) étant sélectionnée parmi une pluralité de parties des bobines secondaires (131b) mutuellement reliées en série par le sélecteur (133), lesdites parties des bobines secondaires (131b) étant opposées à ladite une extrémité des bobines secondaires (131b).

3. Pompe automatique selon la revendication 2, dans laquelle la bobine principale (131a) est pourvue d'un interrupteur (135) servant à bloquer une alimentation électrique de réserve.

4. Pompe automatique selon la revendication 3, dans laquelle le capteur de pression (150) comprend :
un corps (151) installé dans le carter (110) et formé de façon à comporter un trajet à fluide (151a) ayant une extrémité en communication avec l'intérieur du carter (110) ;
une plaque déformable (153) installée sur le corps (151) dans le trajet à fluide (151a), servant à fermer l'autre extrémité du trajet à fluide (151a) et se déformant en réaction à un changement de la pression intérieure du carter (110) ; et
un terminal de connexion (155) installé sur le corps (151), servant à fournir le degré de déformation de la plaque déformable (153) à l'unité de commande (140).

5. Pompe automatique selon la revendication 4, dans laquelle le moteur (130) comporte un capteur de température (160) installé afin de détecter une température du moteur (130) et de transmettre la température à l'unité de commande (140), et l'unité de commande (140) réagit à un signal reçu du capteur de température (140) afin de mettre le moteur (130) à l'arrêt ou en marche.

6. Procédé de commande du fonctionnement d'une pompe automatique pourvue d'un carter (110), d'une roue à aubes (120) installée à l'intérieur du carter (110) et servant à attirer de manière forcée un fluide dans le carter (110) et à l'évacuer de celui-ci, d'un moteur (130) étant apte à faire passer la roue à aubes (120) entre des vitesses de rotation échelonnées ou à la mettre à l'arrêt, et d'un capteur de pression (150) servant à détecter une pression intérieure du carter (110), le procédé comprenant les étapes suivantes :
comparer une pression intérieure du carter (110), après la détection de la pression intérieure, avec une pression définie ;
détecter de façon continue la pression intérieure du carter (110) si la pression intérieure est supérieure à la pression définie, et mettre le moteur (130) en marche si la pression intérieure est égale ou inférieure à la pression définie ; et
détecter un changement de la pression intérieure du carter (110) tandis que le moteur (130) tourne et, si le changement est détecté, augmenter ou diminuer la vitesse de rotation du moteur (130) en changeant de manière sélective un nombre d'enroulements d'une bobine de stator (131) du moteur (130).

7. Procédé selon la revendication 6, comprenant en outre :
augmenter la vitesse de rotation du moteur (130) s'il est déterminé que la pression intérieure du carter (110) est en baisse tandis que le moteur (130) tourne ;
déterminer si la vitesse de rotation du moteur (130) est ou non une vitesse minimale s'il est déterminé que la pression intérieure du carter (110) est en hausse tandis que le moteur (130) tourne ; et
diminuer la vitesse de rotation du moteur (130) lorsque la vitesse de rotation n'est pas la vitesse minimale et mettre le moteur (130) à l'arrêt lorsque la vitesse de rotation est la vitesse minimale.

8. Procédé selon la revendication 7, comprenant en outre :
augmenter la vitesse de rotation du moteur (130) qui tourne à la vitesse minimale puis détecter la pression intérieure du carter (110) ;
diminuer une vitesse de rotation augmentée du moteur (130) puis détecter la pression intérieure du carter (110) ; et
lorsque les pressions intérieures du carter (110) détectées après l'augmentation et la diminution sont égales l'une à l'autre, mettre le moteur (130) à l'arrêt.

9. Procédé selon la revendication 8, dans lequel la bobine de stator (131) est constituée d'une bobine principale (131a) et d'une pluralité de bobines secondaires (131b) mutuellement reliées en série, les bobines secondaires (131b) mutuellement reliées en série ont une extrémité reliée à une extrémité de la bobine principale (131a) et une partie reliée de manière sélective à une autre extrémité de la bobine principale (131a), ladite partie des bobines secondaires (131b) étant sélectionnée parmi une pluralité de parties des bobines secondaires (131b) opposées à ladite une extrémité des bobines secondaires (131b), et
la vitesse de rotation du moteur (130) est changée par le biais d'une connexion de commutation sélective entre ladite autre extrémité de la bobine principale (131a) et une partie parmi lesdites parties des bobines secondaires (131b).

10. Procédé selon la revendication 9, dans lequel une alimentation électrique de réserve fournie au moteur (130) est bloquée lorsque le moteur (130) est au repos.

11. Procédé selon la revendication 9, comprenant en outre :
prévoir un capteur de température (160) servant à détecter une température du moteur (130) ;
mettre le moteur (130) qui tourne à l'arrêt s'il est détecté que la température du moteur (130) est supérieure à une température définie ;
mettre le moteur (130) au repos en marche s'il est détecté que la température du moteur (130) est égale ou inférieure à une première température définie ; et
mettre le moteur (130) à l'arrêt après la mise en marche s'il est détecté que la température du moteur (130) est en hausse de la première température définie à une seconde température définie.
